**Europäisches Patentamt**

**European Patent Office**

**Office européen des brevets**

(11) Veröffentlichungsnummer: **0 071 777**
A2

(12) # EUROPÄISCHE PATENTANMELDUNG

(21) Anmeldenummer: **82106202.3**

(22) Anmeldetag: **10.07.82**

(51) Int. Cl.³: **D 06 F 95/00**

(30) Priorität: **04.08.81 DE 3130862**

(43) Veröffentlichungstag der Anmeldung: **16.02.83**
**Patentblatt 83/7**

(84) Benannte Vertragsstaaten: **AT BE CH DE FR GB IT LI LU NL SE**

(71) Anmelder: **Kleindienst GmbH & Co KG., Argonstrasse 8, D-8900 Augsburg 11 (DE)**

(72) Erfinder: **Scheller, Hartmut, Wettersteinstrasse 28, D-8931 Untermeitingen (DE)**

(74) Vertreter: **Ernicke, Hans-Dieter, Dipl.-Ing., Schwibbogenplatz 2b, D-8900 Augsburg (DE)**

(54) **Wäschereieinrichtung.**

(57) Die Erfindung betrifft eine Wäschereieinrichtung mit einem Kennzeichnungsgerät, mit Sortier-, Behandlungs-, Stapel- und Lagervorrichtungen für die Wäschestücke sowie Fördervorrichtungen zur Zu- und Abförderung der Wäschestücke zu und von diesen Vorrichtungen, bei der eine Anzahl von Datenverarbeitungsgeräten zur Steuerung und Überwachung der Bearbeitung und Behandlung der Wäschestücke durch die Vorrichtungen und des Transports der Wäschestücke zwischen diesen Vorrichtungen vorgesehen ist, wobei die Datenverarbeitungsgeräte untereinander und mit den Vorrichtungen über Leitungen verbunden sind. Um die besonders bei längeren Verbindungsleitungen möglichen Störungen des Wäschereibetriebs durch die Leitungsdämpfungen und insbesondere durch von außen auf die Leitungen einwirkende elektrische und/oder magnetische Felder zu vermeiden, sieht die Erfindung vor, daß die Leitungen durch Lichtleiter gebildet sind.

## Wäschereieinrichtung

Die Erfindung betrifft eine Wäschereieinrichtung mit einem Kennzeichnungsgerät, mit Sortier-, Behandlungs-, Stapel- und Lagervorrichtungen für die Wäschestücke sowie Fördervorrichtungen zur Zu- und Abförderung der Wäschestücke zu und von diesen Vorrichtungen, bei der eine Anzahl von Datenverarbeitungsgeräten zur Steuerung und Überwachung der Bearbeitung und Behandlung der Wäschestücke durch und des Transports der Wäschestücke zwischen diesen Vorrichtungen vorgesehen ist, wobei die Datenverarbeitungsgeräte untereinander und mit den Vorrichtungen über Leitungen verbunden sind.

Eine derartige Wäschereieinrichtung ist bereits in der DE-OS 28 52 190 beschrieben. Mittels dieser Einrichtung ist es möglich, die verschiedenen Wäschestücke sowohl nach Kundenzugehörigkeit als auch nach Artikelart zu kennzeichnen und dann unter Anwendung der elektronischen Datenverarbeitung sowohl die Kennzeichen der verschiedenen Wäschestücke als auch die diese betreffenden, für den Ablauf der Vorgänge in einer Wäscherei wichtigen, übrigen Daten derselben (Stück- Gewichts- und Auslieferungsdaten) zu erfassen und zu speichern sowie auf dieser Basis die Waschestücke unter Berücksichtigung unterschiedlicher Wäschereien und Wäschereiformen in wirtschaftlicher Weise gesteuert zu fördern, zu sortieren, zu behandeln, zu stapeln, zu lagern und zu expedieren. Aufgrund der Kennzeichnung der Wäschestücke sowohl nach ihrer Kundenzugehörigkeit als auch nach ihrer Artikelart und der anschließenden Förderung, Sortierung, Behandlung, Stapelung und Lagerung anhand dieser umfassenden Kennzeichnung ist es zum Beispiel möglich, die unterschiedlichen Wäschestücke bereits im Schmutzwäschebereich (Waschen, Entwässern) exakt abgestimmt auf die an sich nach Artikelart erfolgende Finishbehandlung (Bügeln, Dämpfen, Formen, Mangeln, Falten) zu fördern und zu behandeln.

Die einzelnen, hierbei eingesetzten Datenverarbeitungseinheiten, die miteinander und mit den Vorrichtungen in bekannter Weise kommunizieren, können sowohl mit einer Zentraleinheit als auch ohne eine solche völlig dezentral zusammenarbeiten. Bei größerer Entfernung zwischen den einzelnen Einheiten in größeren Wäschereibetrieben ergeben sich bei größeren Längen der elektrischen Leitungen, die zwischen den einzelnen Einheiten und den Vorrichtungen verlaufen, jedoch erhebliche Störungen der Anlage und damit des Wäschereibetriebes, da die entsprechend langen Leitungen nicht nur eine merkliche Dämpfung aufweisen sondern auch gegen äußere Einflüsse, insbesondere gegen von außen einwirkende elektrische und/oder magnetische Felder sehr störanfällig sind.

Aufgabe der Erfindung ist es daher, solche Störungen des Wäschereibetriebes zu vermeiden und sowohl diese Störanfälligkeit als auch die Dämpfung der Leitungsverbindungen zwischen den einzelnen Datenverarbeitungsgeräten und Vorrichtungen weitgehend zu beseitigen.

Die Lösung dieser Aufgabe besteht gemäß der Erfindung darin, daß die Leitungen, zumindest wenn sie eine bestimmte Länge überschreiten, durch Lichtleiter gebildet sind.

Die Lichtleiter können im Rahmen der Erfindung in bekannter Weise, beispielsweise als Glasfaserkabel mit geeigneter, schützender Ummantelung, wie sie bereits durch die Nachrichtentechnik bekannt sind, oder aus einem sonstigen, gut lichtleitenden Material, ausgeführt sein. Sie sind gegenüber den bisherigen, metallischen elektrischen Leitungen leichter, dämpfungsärmer und gegenüber äußeren elektrischen und/oder magnetischen Feldern praktisch unempfindlich.

Die vorerwähnten Störungen durch Dämpfung und durch äußere elektrische oder/und magnetische Felder werden somit durch die Erfindung vermieden. Es ist lediglich erforderlich, daß in den einzelnen miteinander kommunizierenden Geräten und Teilen der Datenverarbeitungsanlage und Vorrichtungen an jedem Ausgang, an den eine nach außen führende Leitung anzuschließen ist ein Lichtsender, zum Beispiel eine Leuchtdiode oder ein Halbleiterlaser, und an jedem Eingang ein Lichtempfänger, zum Beispiel ein Fotoelement, das die ankommenden Lichtschwankungen in entsprechende Stromschwankungen umsetzt, vorgesehen ist.

Die erfindungsgemäßen Verbindungen der Teile der Datenverarbeitungsanlage und der Vorrichtungen mittels Lichtleiter ermöglicht insbesondere den Vorteil des Einsatzes einer Zentraleinheit (man kommt mit nur wenigen Kennzeichnungen auf dem Wäschestück aus, da alle übrigen, dazugehörigen Daten in der Zentraleinheit gespeichert werden können), die auch noch mit sehr weit entfernten Peripheriegeräten störungsfrei zusammenarbeiten kann. Es ergeben sich dadurch zahlreiche, vorteilhafte Ausführungsformen im Rahmen der Erfindung, die in den Unteransprüchen angegeben sind. Hierbei können die Schaltung und die Anordnung der einzelnen Geräte und Vorrichtungen in der gleichen Weise erfolgen wie bei der bereits eingangserwähnten DE-OS 28 52 190.

Der Grundgedanke der Erfindung ist in der Zeichnung bespielsweise und schematisch dargestellt. Es zeigen:

Fig. 1: ein Schema einer mittels Datenverarbeitungsanlage
gesteuerten Wäschereieinrichtung und

Fig. 2: eine Leitungsverbindung zwischen zwei Geräten der
Datenverarbeitungsanlage.

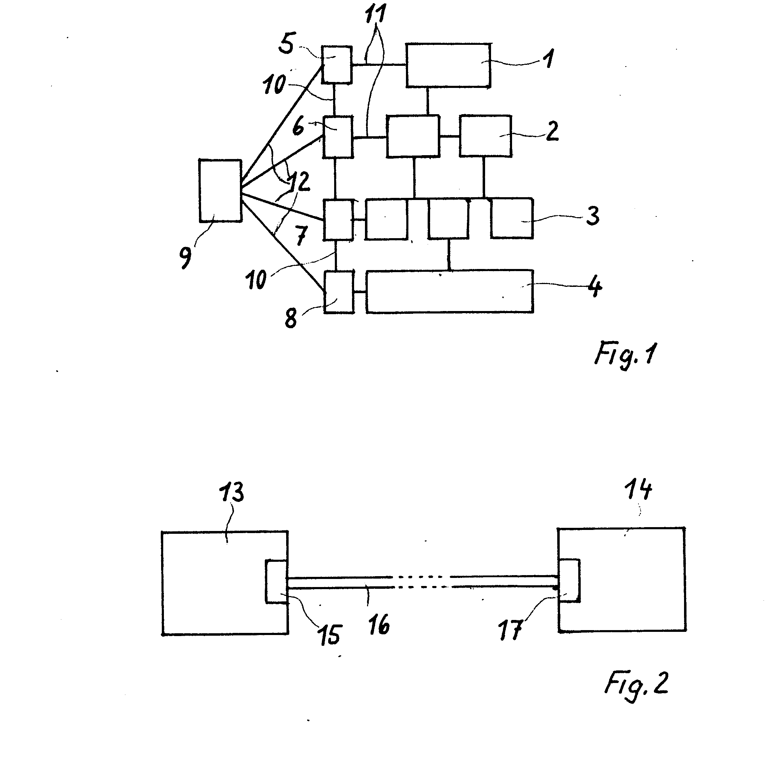

Figur 1 zeigt schematisch den Aufbau einer Wäschereieinrichtung.
Im Schmutzbereich 1 werden die Wäschestücke nach bestimmten
Gesichtspunkten (Kochwäsche, Feinwäsche, Größe, o. ä.) sortiert
und dann den Maschinen des Naßbereichs 2 zugeführt, wo sie in
gewünschter Weise behandelt werden. Nach Beendigung der Naßbehandlung werden sie in den Finishbereich 3 weitergefördert und
dort weiterbehandelt. Schließlich gelangen sie vom Finishbereich
in den Versandbereich 4, wo die für verschiedene Kunden und
Empfänger vorgesehenen, verschiedenartigen Wäschestücke gesammelt,
gestapelt und bis zur Abholung bzw. Versand gelagert werden.

Eine aus Datenverarbeitungsgeräten der verschiedensten Art zur
Erfassung, Eingabe und Verarbeitung aller die Wäschestücke und
deren Bearbeitung durch die einzelnen Vorrichtungen kennzeichnenden Daten, schematisch durch die Einheiten 5 - 8, dargestellt, sind
untereinander und mit den einzelnen Vorrichtungen der Bereiche 1 - 4
sowie mit einer Zentraleinheit 9 über Leitungen 10, 11, und 12 verbunden.
Diese Leitungen sind erfindungsgemäß als an sich bekannte Lichtleiter
ausgebildet.

In Figur 2 ist schematisch eine Leitungsverbindung von einer
Datenverarbeitungseinheit 13 zu einer anderen Einheit 14, von denen
eine auch die Zentraleinheit sein kann, dargestellt. Die Einheit 13

weist einen Lichtsender, zum Beispiel eine durch das Ausgangssignal modulierte Leuchtdiode 15 auf, die über eine Glasfaserleitung 16 an einen Lichtempfänger 17 am Eingang der Einheit 14, zum Beispiel ein geeignetes Fotoelement, das die Lichtschwankungen in entsprechende elektrische Signale umsetzt, angeschlossen ist. Über die Lichtleiter arbeitet die Einrichtung wie bisher über elektrische Leitungen aus Metalldrähten.

Patentansprüche

1) Wäschereieinrichtung mit einem Kennzeichnungsgerät, mit Sortier-, Behandlungs-, Stapel- und Lagervorrichtungen für die Wäschestücke sowie Fördervorrichtungen zur Zu- und Abförderung der Wäschestücke zu und von diesen Vorrichtungen, bei der eine Anzahl von Datenverarbeitungsgeräten zur Steuerung und Überwachung der Bearbeitung und Behandlung der Wäschestücke durch die Vorrichtungen und des Transports der Wäschestücke zwischen diesen Vorrrichtungen vorgesehen ist, wobei die Datenverarbeitungsgeräte untereinander und mit den Vorrichtungen über Leitungen verbunden sind, dadurch  g e k e n n z e i c h n e t , daß die Leitungen (10, 11, 12) durch Lichtleiter gebildet sind.

2) Wäschereieinrichtung nach Anspruch 1, dadurch  g e k e n n - z e i c h n e t , daß eine Zentraleinheit (9), bestehend aus Datenspeicher und Prozessor, vorgesehen ist, die mit einem mit dem Kennzeichnungsgerät gekoppelten Datenerfassungsgerät, einer Abrufelektronik zur Einstellung der Abruf- und Zuführfolge der Wäschestücke und mit einer Dateneingabetastatur und/oder einer maschinellen Abtastvorrichtung zur Einleitung einer Zieladressierung der behandelten Wäschestücke über die Lichtleiter (12) gekoppelt ist.

3) Wäschereieinrichtung nach Anspruch 2, dadurch  g e k e n n - z e i c h n e t ,  daß die Dateneingabetastatur und die maschinelle Abtastvorrichtung zur Zieladressierung mittels Lichtleiter (10) mit an sich bekannten Zielkodiergeräten gekoppelt sind.

4) Wäschereieinrichtung nach Anspruch 3, dadurch  g e k e n n -
z e i c h n e t ,  daß die Zielkodiergeräte auch mit der
Zentraleinheit (9) mittels Lichtleiter (12) gekoppelt sind.

5) Wäschereieinrichtung nach Anspruch 2 oder folgenden, dadurch
g e k e n n z e i c h n e t ,  daß ein Steuertableau zur
direkten Zieladressierung der behandelten Wäschestücke im
Finishbereich (4) mittels Lichtleiter (12) mit der Zentraleinheit (9) gekoppelt ist.

6) Wäschereieinrichtung nach Anspruch 2 oder folgenden, dadurch
g e k e n n z e i c h n e t ,  daß ein ansich bekanntes
Datensichtgerät mit Abruftastatur mittels Lichtleiter (12)
mit der Zentraleinheit (9) gekoppelt ist.

7) Wäschereieinrichtung nach Anspruch 6, dadurch  g e k e n n -
z e i c h n e t ,  daß eine ansich bekannte Druckvorrichtung
mit der Zentraleinheit (9) und der Abruftastatur des Datensichtgerätes mittels elektrischer Leitungen (10 ,  12) gekoppelt
ist.

8) Wäschereieinrichtung nach Anspruch 2 oder folgenden, dadurch
g e k e n n z e i c h n e t ,  daß die Zentraleinheit (9) mit
den Steuerungseinrichtungen der Förder-, Sortier-, Behandlungs-,
Stapel- und Lagervorrichtungen mittels der Lichtleiter (12)
gekoppelt ist.

Dipl.-Ing. H.-D. Ernicke
Patentanwalt

0071777

Fig.1

Fig.2

Firma Kleindienst GmbH & Co. KG.
Patentanwalt Dipl.-Ing. H.-D. Ernicke
Akte 117-711        Blatt 1 von 1